# EUROPEAN PATENT SPECIFICATION

(11) **EP 4 000 927 B1**
(45) Date of publication and mention of the grant of the patent: **03.01.2024**
(21) Application number: 20206957.1
(22) Date of filing: 11.11.2020
(51) Int. Cl.: B32B 38/18, E04F 13/14, B32B 5/02, B32B 7/12, B32B 9/04, B28D 1/00

(54) **PLANT AND METHOD FOR THE APPLICATION OF REINFORCEMENT NET ON CERAMIC OR STONE SLABS**
ANLAGE UND VERFAHREN ZUR ANWENDUNG EINES VERSTÄRKUNGSNETZES AUF KERAMIK- ODER STEINPLATTEN
INSTALLATION ET PROCEDE D'APPLICATION D'UN FILET DE RENFORT SUR DES DALLES EN CÉRAMIQUE OU EN PIERRE

(43) Date of publication of application: 25.05.2022
(73) Proprietor: Mectiles Italia S.r.l., 42013 Casalgrande (RE) (IT)
(72) Inventor: LOTTI, Giovanni, 42013 Casalgrande (RE) (IT)
(74) Representative: Di Bernardo, Antonio

(56) References cited:
- WO-A1-2018/193416
- WO-A1-2019/053754
- IT-A1- MO20 080 239

## Description

### TECHNICAL FIELD

The present invention relates to the sector of slab processing, in particular ceramic or stone slabs. In detail, the present invention relates to a plant and a relative method for coupling a net, or reinforcement reinforcement net, to a ceramic or stone slab.

### BACKGROUND

In the ceramic and "natural" stone processing industry, it is customary to apply a net, or reinforcement net, to one of the main surfaces of the slabs to secure them in case of breakage. In detail, the slabs - in particular large slabs - can be structurally fragile, having a pair of large faces - one lower and one upper - separated by a limited thickness. In case of breakage, the net holds the single pieces of the slab, preventing some of them from falling and injuring the personnel involved in the transport or installation thereof.

To date, the reinforcement net application procedure - that is, applying the net to the slab - envisages placing the slab to be processed onto a rigid support element, in the jargon called 'stretcher', with the lower face turned upwards and the upper face in contact with the stretcher. Alternatively, the upper face of the slab is protected with an adhesive film and rested directly on the conveying system without the aid of the stretcher.

Subsequently, the lower face is then covered with an adhesive substance, onto which the net is deposited. Finally, the slab is introduced into a drying oven in order to dry the adhesive substance, thus fixing the net on the slab.

In order to carry out the reinforcement net application procedure, the slab is lifted from a loading station, where it lies with the lower face turned downwards, and is rotated so as to be placed onto the stretcher (or onto the loading system if the upper face is protected by adhesive film) with the lower face turned upwards. This is necessary for depositing the net and the adhesive substance onto the lower face of the slab. Furthermore, at the end of the processing, the slab is rotated again so as to be deposited in an unloading station with the lower slab turned downwards.

These slab overturning operations require the preparation of special machines in the plants for processing the slabs and not negligible times for them to be finished. In particular, slab overturning machines are particularly complex and expensive, as they must be able to rotate the slabs by 180° with precision and to position them precisely on the stretcher, avoiding causing chips, cracks or other damages in the manipulated slab.

Furthermore, the stretcher, where present, must comprise or be coated with a special shock-absorbing material, in order to preserve the integrity and the aesthetic characteristics of the upper face of the slab, with a consequent increase in complexity and/or consumables and , in general, of the operating costs of the reinforcement net application plant.

WO2019/053754 discloses a process for applying an anti-fragmentation system to artifacts made of stone.

WO2018/193416 discloses a resin line for manufacturing reinforced stone or ceramic slabs.

Italian patent application 102008901660387 discloses a process to reinforce stone slabs and relative devices.

### OBJECTS AND SUMMARY OF THE INVENTION

An object of the present invention is to overcome the disadvantages of the prior art.

In particular, it is an object of the present invention to present a reinforcement net application plant and a relative method that allows a net to be applied to a slab in a simple, effective and economical way.

A further object of the present invention is to propose a reinforcement net application plant and relative method which allows a net to be applied to a slab without requiring the slabs to be overturned at the entry to and at the exit from the plant.

A further object of the present invention is to propose a reinforcement net application plant and a relative method that allows the slab to be placed onto a stretcher without necessarily requiring the presence of a shock-absorbing coating.

A further object of the present invention is to propose a reinforcement net application plant and relative method that is flexible to use, allowing, for example, to apply different nets according to the need without requiring an interruption or slowing down of the reinforcement net application procedure.

These and other objects of the present invention are achieved by a plant incorporating the features of the accompanying claims, which form an integral part of the present description.According to a first aspect, the present invention is directed to a plant for processing ceramic or stone slabs. The plant comprises a reinforcement net application station for laying a net on a rigid element, and a station for depositing an adhesive substance onto the net placed on the rigid element. The adhesive substance is adapted to fix the net to a first face of the slab. The plant therefore comprises a loading station for depositing the slab onto the net, coated with adhesive substance, which lies on the rigid support element. A drying oven is configured to receive the slab to which the net is applied, and to dry the adhesive substance. Finally, an unloading station is configured to lift the slab with the net from the rigid support element.

Thanks to this solution, the plant is able to apply a reinforcement net to ceramic or stone slabs, even of large sizes, in a reliable and precise way, without damaging the slabs and without requiring the slabs to be overturned during or before processing. This allows to obtain a particularly compact, simple and economical plant, without reducing the quality of the products obtained.

Furthermore, since the visible surface of the slabs does not rest on the stretcher, it is not necessary to form or wrap the stretchers with special materials aimed at avoiding damaging the visible surface of the slabs and therefore the aesthetic appearance of the product.

In one embodiment, the unloading station is configured to lift the slab from the rigid support element without overturning it.

The unloading station is simple and inexpensive to make, as it does not require the ability to rotate the slab.

In one embodiment, the plant comprises a movement group configured to move the rigid support element through the reinforcement net application station, the station for depositing the adhesive substance, the loading station, the drying oven and the unloading station in sequence.

Thanks to the movement plant, the plant can couple the net to the slab in a completely automatic way.

In one embodiment, the plant further comprises a station for applying a release agent configured to deposit a release agent onto the rigid support element. Advantageously, the station for applying the release agent is arranged upstream of the reinforcement net application station with respect to a movement direction of the rigid support element.

Preferably, the release agent comprises wax or silicone material.

The application of the release agent facilitates the separation of the slab from the stretcher at the end of the processing performed by the plant.

In one embodiment, the plant further comprises a cleaning station configured to remove foreign bodies from the rigid support element. Advantageously, the cleaning station is arranged upstream of the reinforcement net application station, and of the station for applying the release agent, if any, with respect to a movement direction of the rigid support element.

Cleaning the rigid support element ensures that the surface thereof is free from foreign bodies and therefore the net can be placed uniformly with a consequent better adhesion of the net to the slab.

In one embodiment, the reinforcement net application station comprises at least two reinforcement net application modules which can be actuated alternately with each other, wherein each reinforcement net application module is configured to deposit a respective net onto the rigid support element.

This solution makes it possible to apply nets with different characteristics to different slabs and/or to replace exhausted net reels without interrupting the operation of the plant.

In one embodiment, the station for depositing the adhesive substance is configured to apply a polyurethane adhesive on the net in case a ceramic slab is processed or an epoxy resin in case a stone slab is processed.

The Applicant has determined that these materials are particularly effective in coupling the net to the respective slab.

In one embodiment, the station for depositing the adhesive substance comprises an adhesive substance dispensing apparatus of the comb type, of the airless type or of the airbrush type.

The Applicant has determined that these types of dispensers allow distributing the adhesive substance on the net in a particularly effective way.

In one embodiment, the station for applying the adhesive substance comprises a Cartesian or anthropomorphic actuator configured to move the apparatus for dispensing the adhesive substance on the net deposited on the rigid support element along at least two axes.

In this way it is possible to distribute the adhesive substance on the net precisely and uniformly.

In one embodiment, the plant further comprises an atmospheric vacuum station placed between the loading station and the drying oven. The atmospheric vacuum station comprises two half-shells adapted to come into contact to define a housing chamber, and a pump adapted to reduce the pressure inside the housing chamber up to a value comprised between 2000 Pascal and 8000 Pascal.

In this way, when the stretcher with the slab is housed in the atmospheric vacuum station, the glue is uniformly distributed on the slab, as the fluidity and the smoothness thereof is increased thanks to the extraction of air from inside the half-shells.

A different aspect of the present invention relates to a method for processing a ceramic or stone slab comprising the steps of:
- laying a net on a rigid support element;
- depositing an adhesive substance onto the net adapted to fix the net to a first face of the slab,
- resting the slab on the net, coated with adhesive substance, stretched out on the rigid support element,
- drying the adhesive substance so that the net sticks to the slab, and
- unloading the slab with the net by lifting the slab with the net from the rigid support element.

Preferably, the step of unloading the slab with the net by lifting the slab with the net from the rigid support element envisages lifting the slab from the rigid support element without overturning it, i.e. keeping the net turned downwards.

In addition, the method may comprise the step of depositing a layer of release agent onto the rigid support element before depositing the net onto the rigid support element.

Additionally or alternatively, the method may comprise the step of removing processing residues from the rigid support element prior to the step of depositing a layer of release agent onto the rigid support element, if performed, or depositing the net onto the rigid support element.

Furthermore, the step of placing the net onto the rigid support element envisages, preferably, selecting a net to be placed onto the rigid support element between at least two nets.

In one embodiment, the method also envisages bringing the slab on the stretcher to a pressure comprised between 2000 Pascal and 8000 Pascal before drying the adhesive, so as to allow a better distribution of the adhesive on the slab.

Further features and advantages of the present invention will be more apparent from the description of the accompanying drawings.

### BRIEF DESCRIPTION OF THE DRAWINGS

The invention will be described below with reference to some examples, provided for explanatory and non-limiting purposes, and illustrated in the accompanying drawings. These drawings illustrate different aspects and embodiments of the present invention and, where appropriate, reference numerals illustrating similar structures, components, materials and/or elements in different figures are indicated by similar reference numbers.
Figure 1 is a block diagram of a plant for processing ceramic or stone slabs according to an embodiment of the present invention;
Figure 2 is a plan view of the plant of Figure 1 according to an embodiment of the present invention;
Figures 3A and 3B are schematic plan and side views, respectively, of a slab processed by the plant of Figures 1 and 2;
Figures 4A and 4B are schematic plan and side views, respectively, of a stretcher of the plant of Figures 1 and 2;
Figure 5 is a schematic side view of a stretcher coated with a release agent;
Figure 6 is a schematic plan view of a net to be applied to the slab;
Figure 7 is a side view of the net of Figure 6 placed on the stretcher of Figures 4A and 4B;
Figure 8 is a side schematic view of the net in Figure 7 coated with an adhesive;
Figure 9 is a schematic side view of the slab deposited on the adhesive coated net of Figure 8;
Figure 10 is a side schematic view of the net coupled to the slab, and
Figure 11 is a flow chart of a procedure for processing ceramic or stone slabs according to an embodiment of the present invention;
Figure 12 illustrates a variant of the plant of Figure 2;
Figure 13A illustrates a sectional view of an atmospheric vacuum station of the plant of Figure 12;
Figure 13B illustrates a plan view of a detail of the atmospheric vacuum station of the plant of Figure 12

### DETAILED DESCRIPTION OF THE INVENTION

While the invention is susceptible to various modifications and alternative constructions, certain preferred embodiments are shown in the drawings and are described hereinbelow in detail. It is in any case to be noted that there is no intention to limit the invention to the specific embodiment illustrated, rather on the contrary, the invention intends covering all the modifications, alternative and equivalent constructions that fall within the scope of the invention as defined in the claims.

The use of "for example", "etc. ", "or" indicates non-exclusive alternatives without limitation, unless otherwise indicated. The use of "includes" means "includes, but not limited to" unless otherwise stated.

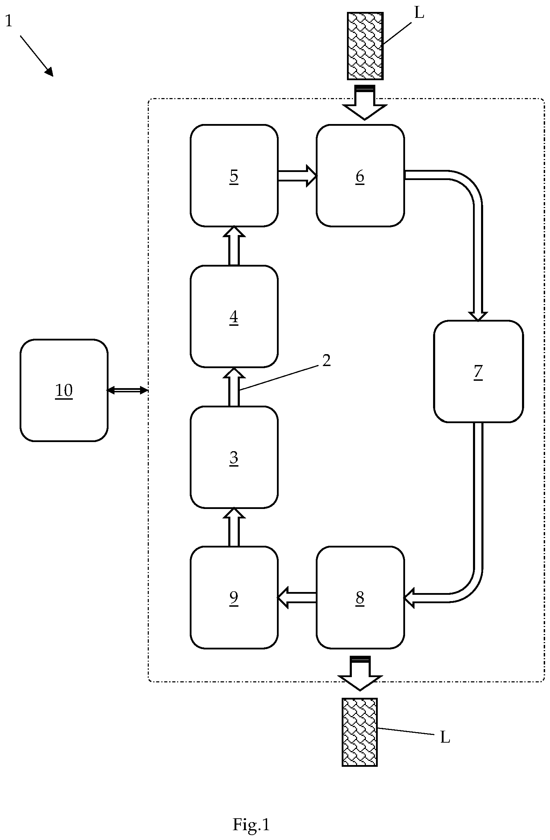

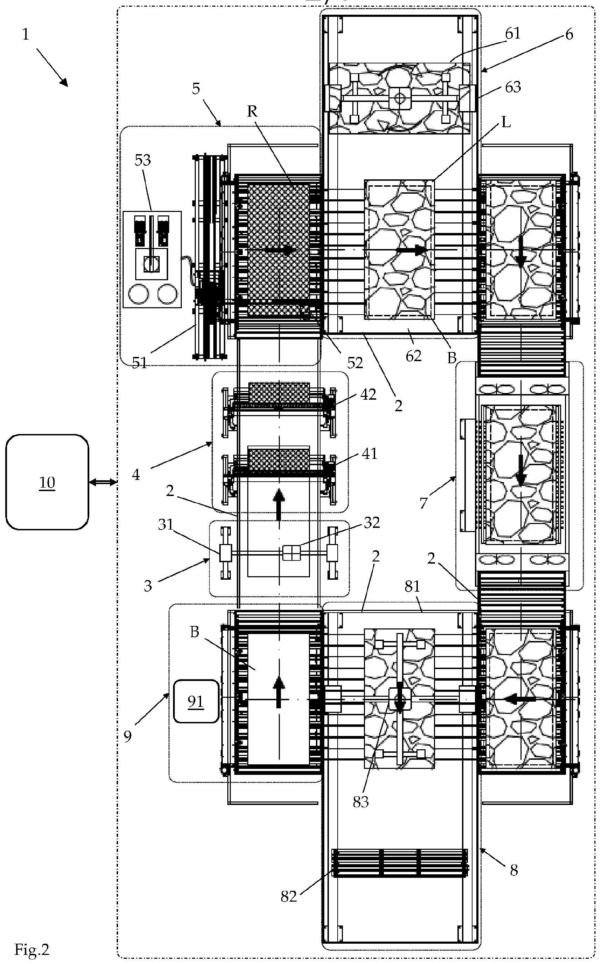

With reference to Figures 1 and 2, a block diagram of a plant 1 for processing ceramic or stone slabs (indicated by the reference L) according to an embodiment of the present invention is illustrated.

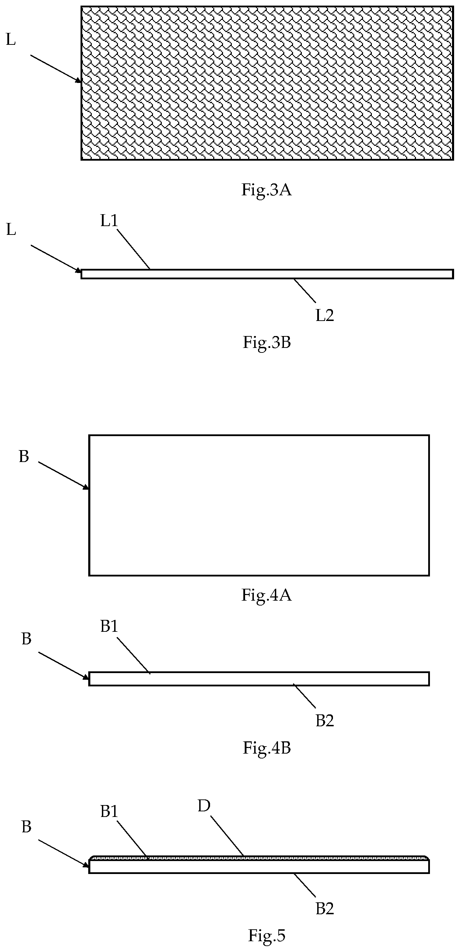

In general, a slab L - schematically illustrated in Figures 3A and 3B - has an upper (or aesthetic) face L1 intended to remain visible once laid (for example, to form a flooring or to cover a wall), and a lower (or rest) face L2, opposite the upper face L1, configured to be fixed to a support body (for example, a slab in the case of flooring or a wall in the case of covering). In particular, the sizes of the surfaces L1 and L2 of the slab L are much greater than the thickness separating these surfaces L1 and L2.

The plant 1 comprises a movement group 2 configured to displace a rigid slab-like support, indicated by the technical term stretcher B below, through a plurality of stations of the plant 1. This displacement is illustrated in Figure 1 with arrows.

The stretcher B is, for example, a wooden element coated with plastic material, e. g. plastic material deriving from polythenes, however other solutions can be adopted which are able to transport the weight of a slab without being damaged. In the example of Figure 2 described here, the stretcher B - schematically illustrated in Figures 4A and 4B - has a (upper) receiving surface B1 with sizes equal to or smaller than a lower face L2 of the slab L that it will have to support during processing, and a (lower) contact surface B2, opposite the upper surface B1, intended to come into contact with the movement group 2.

The movement group comprises conveying elements known per se, and it therefore will not be described in detail hereinafter. By way of example, the movement group comprises one or more roller and/or conveyor belt modules, each associated with a respective station and/or a transition region between two adjacent stations, according to criteria per se known and therefore not described in detail for brevity's sake.

The stretcher B is made to transit through a station for applying the release agent 3 configured to deposit a layer of a release agent D onto the stretcher B - in particular, onto the receiving surface B1 of the stretcher B, as schematically illustrated in Figure 5. For example, the release agent comprising wax or silicone material. For this purpose, the station for applying the release agent 3 comprises an actuator 31 configured to move along an axis transverse to the movement direction of the stretcher B and equipped with a release agent dispenser 32, for example a nozzle configured to emit a release agent spray adapted to cover the receiving surface B1 of the stretcher B in a substantially uniform manner.

The stretcher B then passes through a reinforcement net application station 4 configured to deposit a net R onto the stretcher B, in particular onto the receiving surface B1 of the stretcher B.

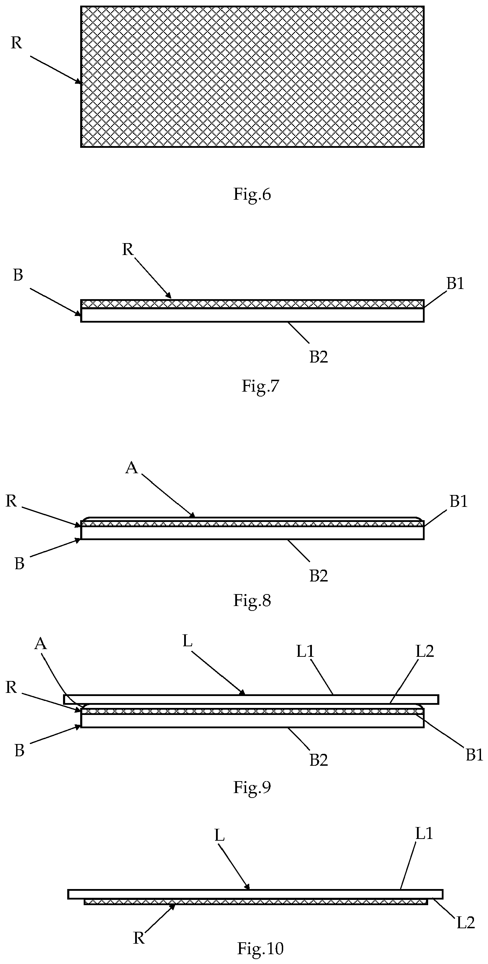

The net R - schematically illustrated in Figure 6 - is a substantially laminar reticular structure. For example, the net R can be substantially constituted by a mesh made of fibre glass or other synthetic material.

In the example considered, the reinforcement net application station 4 comprises two reinforcement net application modules 41 and 42 each of which is loaded with a reel of a respective type of net - for example, made of a different reinforcement material and/or having a different size of the meshes , thickness, etc. The plant 1 is therefore configured to deposit a net R onto the stretcher B, as schematically illustrated in Figure 7 where the release agent D is omitted for simplicity's sake. The reinforcement net application station then comprises cutting means for cutting the net to the appropriate length, for example equal to or smaller than the lower face L2 of the slab L to which it is to be coupled. Advantageously, the maximum length of the net R is smaller than or equal to the largest size of the receiving surface B1 of the stretcher onto which it is deposited, so as not to protrude from the stretcher. The cutting means can be included in the reinforcement net application modules or be separated therefrom.

Subsequently, the stretcher B is moved up to a station for depositing the adhesive 5 configured to deposit an adhesive A onto the net R placed on the stretcher B - as schematically illustrated in Figure 8.

In the example considered, the station for depositing the adhesive 5 comprises an actuator 51 configured to move along two axes - substantially parallel to a plane on which the stretcher B lies. The actuator 51 is operated to move an apparatus for dispensing 52 the adhesive substance over the entire surface of the net R deposited on the stretcher B. For example, the actuator 51 belongs to the type of the so-called Cartesian portal robot or it can be an anthropomorphic arm.

The dispensing apparatus 52 is configured to apply a uniform layer of adhesive onto the net R. For example, the dispensing apparatus 52 is a dispensing apparatus of the comb type, of the airless type or of the airbrush type.

In the example considered, the station for depositing the adhesive 5 comprises an adhesive pumping module 53 equipped with a pair of tanks intended to store two different substances, which, suitably mixed at the time of dispensing, constitute the adhesive A which is deposited onto the net R. In one embodiment, the pumping module comprises two volumetric pumps, each of which draws a respective component of the adhesive A in a predetermined quantity and pressure from a respective tank and pump, sending it to the dispenser.

In an embodiment suitable for the application of a reinforcement net to ceramic slabs, the adhesive A is of the polyurethane type, therefore the two tanks of the pumping module 53 are loaded with polyols and isocyanate, respectively.

In an embodiment suitable for the application of a reinforcement net to natural stone slabs, on the other hand, the two tanks of the pumping module 53 are loaded with an epoxy resin and the catalyst thereof, respectively.

The stretcher B with the net R covered with adhesive A is then transferred to a loading station 6 configured to take a slab L from a loading area 61 and deposit the slab L onto the stretcher B centering the slab on the stretcher and keeping the slab and stretcher oriented according to the same main direction.

The loading area can be, for example, a storage box or an *A-frame* stand or a loading plane. The loading station is, thus, equipped with means for lifting the slab from the loading station and moving it appropriately in order to deposit it onto the stretcher B which is positioned in a receiving area 62. More in detail, the slab L is deposited on the stretcher B so that the lower face L2 of the slab L comes into contact with the net R coated with adhesive A.

For this purpose, the loading station 6 comprises an actuator 63 configured to move along three axes and comprises a gripping group capable of picking up the slab without causing scratches, cracks, chips and/or other damages that could compromise an aesthetic character of the slab L, in particular of the upper face L1. Advantageously, the actuator 63 is configured to pick up and lift the slab L from the loading area 61, displace the slab L above the receiving area 62, orient the slab L so that it is aligned in plan with the stretcher B positioned in the loading area 62 - and, consequently, also to the net R covered with adhesive A deposited on the stretcher B - and, finally, deposit and release the slab L onto the stretcher B, thus, with the lower face L2 of the slab L resting on the net R coated with adhesive A - as schematically illustrated in Figure 9.

In the example of Figure 2, the actuator 63 belongs to the so-called robot with movable Cartesian portal on three axes and the gripping group comprises one or more suction cups, a depression/vacuum gripping plant and/or other suitable similar elements adapted to be coupled to the upper face L1 of the slab L and to allow it to be lifted.

Once the slab L is loaded on the net R coated with adhesive A, the slab L and stretcher B is conveyed to a drying oven 7. The drying oven 7 is configured to heat the assembly, consisting substantially of the slab L and of the net R coated with adhesive A, to a predetermined temperature - for example comprised between 40 and 50 °C. In particular, the drying oven 7 is configured to dry the adhesive A so that the net R is firmly bound to the slab L as schematically illustrated in Figure 10, where the solidified adhesive A is not shown for simplicity's sake. The drying oven 7 is preferably a ventilated oven, it is however possible to provide other types of ovens.

Once the drying of the adhesive A has been completed, the stretcher B with the slab thereon is moved up to an unloading station 8. The unloading station 8 is configured to take the slab L (to which the net R is now glued) from the stretcher B located in a pickup area 81 and position it in an unloading area 82, for example a storage box, or an *A-frame* stand or an unloading plane, from which it is transferred to a warehouse or to another processing plant.

Preferably, the slab L with the glued net R is lifted from the stretcher B without being overturned. For this purpose, the unloading station 8 comprises an actuator 83 configured to move along three axes and comprises a gripping group configured to pick up the slab L without causing scratches, cracks, chips and/or other damages. In the example of Figure 2, the actuator 83 belongs to the so-called robot with movable Cartesian portal on three axes and the gripping group comprises one or more suction cups, a depression/vacuum gripping plant and/or other suitable similar elements adapted to be coupled to the upper face L1 of the slab L and to allow it to be lifted.

The stretcher B, released from the slab and from the net, is thus moved up to a cleaning station 9 configured to remove foreign bodies - such as dust and/or processing residues - from the receiving surface B1 of the stretcher B. For this purpose, the cleaning station 9 comprises an actuator 91 configured to mechanically remove foreign bodies from the receiving surface B1 of the stretcher B. For example, the actuator 91 comprises a blower configured to channel a flow of compressed air to the receiving surface B1 of the stretcher B and/or comprises one or more brushes or scrapers configured to remove foreign bodies from the receiving surface B1 of the stretcher B through mechanical rubbing.

Finally, the stretcher B is transferred from the movement group 2 to the station for applying the release agent 3 for a new application of the release agent.

Naturally, the plant 1 can comprise a plurality of stretchers, each of which is positioned at a predetermined distance from the others on the movement group 2. For example, a number of stretchers B equal to the number of stations of the plant 1 is provided, which are moved from one station to the next one of the plant 1 in a synchronous way. In this way it is possible to obtain a high efficiency of the plant 1 in terms of slabs L processed per unit of time.

Advantageously, the operation of the plant 1 is governed in a substantially automatic way by at least one control system 10 - for example, one or more microcontrollers, PLCs, computers and/or a computer network comprising several processing devices.

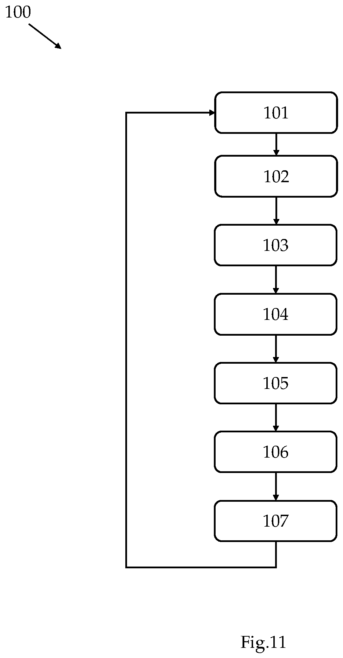

As is evident to the skilled person, the plant 1 just described therefore implements a method 100 for processing slabs, the steps of which can be summarised as described below and illustrated in the flow chart of Figure 11.

Initially, the release agent is deposited onto the stretcher B (step 101), in particular onto the receiving surface thereof turned upwards. Then, the net R is deposited onto the stretcher B (step 102) and the adhesive is deposited onto the net R (step 103).

The slab L is therefore rested on the net R (step 104), so that the lower face L2 is in contact with the adhesive layer A, while the upper face L1 of the slab remains exposed to the external environment.

At this point, the adhesive A between slab L and net R is dried (step 105) so that the slab L and the net R are firmly coupled one to another. Then, the slab L with the glued net R is removed from the plant 1 (step 106), for example to be stored or subjected to other processings. The removal of the slab with the glued net advantageously takes place by lifting and translating the slab, but without overturning the slab itself.

Finally, the stretcher B is cleaned of any foreign bodies (step 107), in particular, present on the receiving surface B1 of the stretcher B, and it can be reused for processing another slab.

Thanks to the plant 1 and to the method 100 described above, it is evident how it is possible to apply a net R to a slab L, in particular a ceramic or stone slab, in a safe, precise and reliable way. In particular, the application of the net R to the slab L according to the embodiments of the present invention does not require any overturning of the slab, with a consequent simplification of both the plant and the processing procedure.

However, it is clear that the above mentioned examples must not be interpreted in a limiting sense and the invention thus conceived is susceptible to many modifications and variations.

For example, in alternative embodiments (not illustrated) at least one of the station for depositing the release agent and the cleaning station can be omitted. For example, one or both of these stations can be omitted if the adhesive deposited on the net is not able to be fixed on the receiving surface of the stretcher and/or the residual quantity of foreign bodies on the stretcher is negligible or nil for processing purposes of the slab.

In alternative embodiments (not illustrated), the stretcher can have a larger receiving surface than the slab it receives.

Furthermore, nothing prevents from providing a reinforcement net application station comprising only a reinforcement net application module as well as a reinforcement net application station comprising two or more reinforcement net application modules configured to deposit nets with the same characteristics, for example in order to allow replacing an exhausted net reel with a new net reel, without interrupting the operation of the plant.

Furthermore, the control system can be equipped with at least one user interface for receiving instructions from an operator and displaying information to the operator on the operation of the plant.

The actuators of the release agent deposition, adhesive deposition, cleaning, loading and unloading stations can be any as long as they allow to operate on the net, on the slab and/or on the stretcher as described above.

Similarly, the drying oven can also be replaced by a different heating, cooling and/or pressure station adapted to ensure that the adhesive reacts - in general, hardens - effectively fixing the net to the slab.

Furthermore, nothing prevents providing alternative embodiments (not illustrated and less effective in production terms) in which one or more of the steps of the method described above are carried out manually instead of in automated stations. For example, the net and/or the adhesive can be positioned manually by human operators trained for the purpose. Likewise, the adhesive can be dried manually by an operator equipped with a special device capable of dispensing hot air. Plants will therefore correspond to these embodiments where, with respect to the plant 1 of Figure 2, some automated stations are replaced by simpler conveyor belts and work planes on which the stretcher (with or without slab depending on the processing step) is made to transit and is treated by the operator.

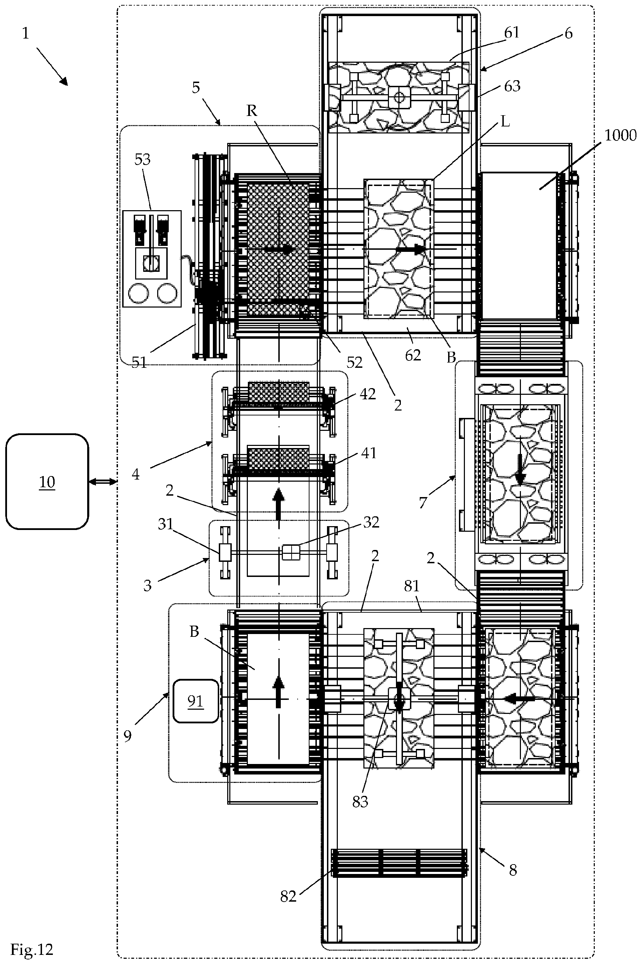

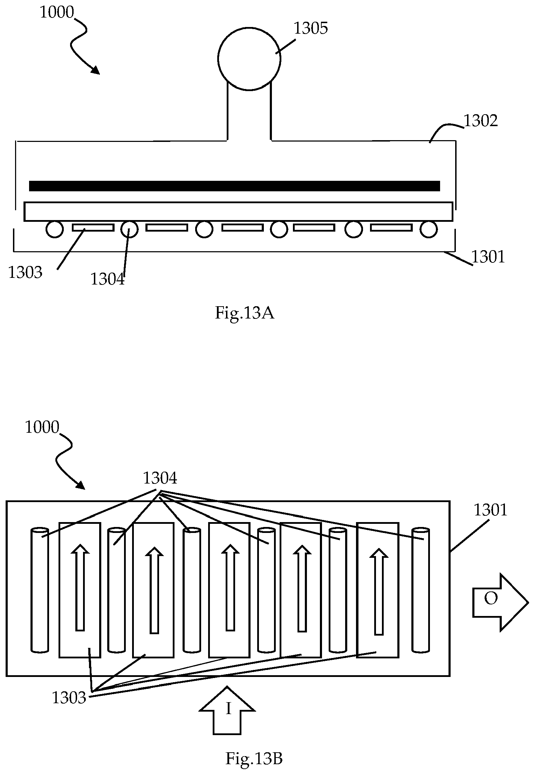

Finally, in an embodiment illustrated in Figure 12, the plant 1 provides an atmospheric vacuum station 1000 positioned between the loading station 6 and the drying oven 7. The atmospheric vacuum station 1000, schematically illustrated in Figures 13A and 13B, comprises two half-shells, lower 1301 and upper 1302, which are essentially two hollow bodies capable of coupling together and defining a housing chamber isolated from the outer world. The lower half-shell 1301 comprises inside a 90° pallet, i. e. a movement system with belts 1303 and rollers 1304 capable of receiving the stretcher with the slab from an entry direction I, in this case from the loading station, and of moving it towards an orthogonal direction O, in this case directed towards the drying oven. The belts receive the stretcher with the slab and bring it completely inside the lower half-shell, moving along a direction parallel to the entry direction. Once the stretcher with the slab is completely inside the lower half-shell, the upper half-shell is lowered and, once the two half-shells are in contact, air is sucked from the internal chamber by means of a pump 1305 in such a way as to create vacuum, that is to bring the internal pressure to a value lower than the atmospheric one, in particular between 2000 and 5000 Pascal. The process thus allows the glue to adhere to the slab homogeneously. The stretcher with the slab are kept at this pressure value for a predetermined time, for example from 10 to 20 seconds, after which the internal pressure is brought back to atmospheric value and the upper bell is raised. At this point the stretcher with the slab is made to exit from the atmospheric vacuum station thanks to the rollers 1304 which are lifted above the belts 1303.

The atmospheric vacuum station of Figures 13A and 13B is suitable for use in plant 1, where the conveying system bends at 90° to pass from the loading station to the drying oven, however where there is no such a curve, the 90° pallet that moves the stretcher with the slab, bringing it inside the lower half-shell and making it exit therefrom, can be replaced by a simpler conveying system with belts or rollers capable of moving the stretcher along one direction only.

It is then clear that the atmospheric vacuum station can also be used with traditional plants where, as described above in the section relating to the state of the art, the slab is overturned and the adhesive substance is deposited directly onto the slab instead of onto the stretcher. Also in this case, in fact, the atmospheric vacuum station allows a better distribution of the glue and a better reinforcement net application. Such a plant will therefore be equipped with a slab loading station, a slab conveying system, a station for depositing the adhesive onto the slab, a station for depositing the net, the atmospheric vacuum station, the adhesive drying station and a slab unloading station.

## Claims

1. A plant (1) for processing ceramic or stone slabs, comprising:
- a loading station (6) for loading a slab (L) onto a rigid support element (B);
- a reinforcement net application station (4) for laying a net (R);
- a station for depositing (5) an adhesive substance (A), the adhesive substance (A) being adapted to fix the net (R) to a first face (L2) of the slab (L),
- a drying oven (7) configured to receive the slab (L) to which the net (R) is applied on the first face (L2) and to dry the adhesive substance (A), and
- an unloading station (8) of the slab (L) with the glued net (R), configured to lift the slab (L) with the net (R) from the rigid support element (B),
**characterised in that**
the reinforcement net application station (4) is configured to place the net (R) onto the rigid support element (B);
the station for depositing (5) the adhesive substance (A) is configured to deposit the adhesive substance (A) onto the net (R) placed on the rigid support element (B), and
the loading station (6) is configured to deposit the slab (L) onto the net (R) coated with adhesive substance (A).

2. The plant (1) according to claim 1, wherein the unloading station (8) is configured to lift the slab (L) from the rigid support element (B) without overturning it.

3. The plant (1) according to claim 1 or 2, further comprising a movement group (2) configured to move the rigid support element (B) through the reinforcement net application station (4), the station for depositing the adhesive substance (5), the loading station (6), the drying oven (7) and the unloading station (8) in sequence.

4. The plant (1) according to claim 2 or 3, further comprising a station for applying a release agent (3) configured to deposit a release agent (D) onto the rigid support element (B),
wherein the station for applying the release agent (3) is arranged upstream of the reinforcement net application station (4) with respect to a movement direction of the rigid support element (B) in the plant.

5. The plant (1) according to claim 4, wherein the release agent (D) is wax or silicone material.

6. The plant (1) according to any one of the preceding claims, further comprising a cleaning station (9) configured to remove foreign bodies from the rigid support element (B),
wherein the cleaning station (9) is arranged upstream of the reinforcement net application station (4), and of the station for applying the release agent (3) if any, with respect to a movement direction of the rigid support element (B) in the plant.

7. The plant (1) according to any one of the preceding claims, wherein the reinforcement net application station (4) comprises at least two reinforcement net application modules (41, 42) which can be actuated alternately with each other, wherein each reinforcement net application module (41, 42) is configured to deposit a respective net (R) onto the rigid support element (B).

8. The plant (1) according to any one of the preceding claims, wherein the station for depositing the adhesive substance (5) is configured to apply a polyurethane adhesive on the net (R) in case a ceramic slab is processed or an epoxy resin in case a stone slab is processed.

9. The plant according to any one of the preceding claims, further comprising an atmospheric vacuum station placed between the loading station and the drying oven (7), the atmospheric vacuum station (1000) comprising two half-shells (1301, 1302) adapted to come into contact to define a housing chamber, and a pump (1305) adapted to reduce the pressure inside the housing chamber up to a value comprised between 2000 Pascal and 8000 Pascal.

10. A method (100) for processing a ceramic or stone slab, comprising the steps of:
- laying (102) a net (R) on a rigid support element (B);
- depositing an adhesive substance (103) onto the net adapted to fix the net to a first face of the slab,
- resting (104) the slab on the net, coated with adhesive substance, stretched out on the rigid support element,
- drying (105) the adhesive substance so that the net is fixed to the slab, and
- unloading (106) the slab with the net by lifting the slab with the net from the rigid support element.

11. The method (100) according to claim 10, wherein the step of unloading (106) the slab (L) with the net (R) envisages lifting the slab (L) from the rigid support element (B) without overturning it.

12. The method (100) according to claim 10 or 11, further comprising the step of depositing (101) a layer of release agent (D) onto the rigid support element (B) before depositing the net (R) onto the rigid element support (B).

13. The method (100) according to any one of claims 10 to 12, further comprising the step of removing (107) processing residues from the rigid support element (B) before depositing (102) the net (R) or a release agent onto the rigid support element (B).

14. The method (100) according to any one of claims 10 to 13, wherein the step of placing (102) the net (R) on the rigid support element (B) envisages selecting a net (R) to be placed on the rigid support element (B) between at least two nets (R).

15. The method (100) according to any one of claims 10 to 14, further comprising the step of bringing the slab on the support element to a pressure comprised between 2000 Pascal and 8000 Pascal before drying the adhesive.

## Patentansprüche

1. Anlage (1) zum Bearbeiten von Keramik- oder Steinplatten, umfassend:
- eine Beladestation (6) zum Laden einer Platte (L) auf ein starres Trägerelement (B);
- eine Verstärkungsnetz-Anbringungsstation (4) zum Legen eines Netzes (R);
- eine Station zum Auftragen (5) einer Klebesubstanz (A), wobei die Klebesubstanz (A) geeignet ist, das Netz (R) an einer ersten Fläche (L2) der Platte (L) zu fixieren,
- einen Trockenofen (7), der konfiguriert ist, um die Platte (L), auf die das Netz (R) auf der ersten Seite (L2) angebracht ist, aufzunehmen und die Klebesubstanz (A) zu trocknen, und
- eine Entladestation (8) der Platte (L) mit dem geklebten Netz (R), die konfiguriert ist, um die Platte (L) mit dem Netz (R) von dem starren Trägerelement (B) zu heben, **dadurch gekennzeichnet, dass**
die Verstärkungsnetz-Anbringungsstation (4) konfiguriert ist, um das Netz (R) auf dem starren Trägerelement (B) zu platzieren;
die Station zum Auftragen (5) der Klebesubstanz (A) konfiguriert ist, um die Klebesubstanz (A) auf das Netz (R), das auf dem starren Trägerelement (B) platziert ist, aufzutragen, und
die Beladestation (6) konfiguriert ist, um die Platte (L) auf das Netz (R), das mit der Klebesubstanz (A) beschichtet ist, abzulegen.

2. Anlage (1) gemäß Anspruch 1, wobei die Entladestation (8) konfiguriert ist, um die Platte (L) von dem starren Trägerelement (B) zu heben, ohne sie zu kippen.

3. Anlage (1) gemäß Anspruch 1 oder 2, ferner umfassend eine Bewegungsgruppe (2), die konfiguriert ist, um das starre Trägerelement (B) nacheinander durch die Verstärkungsnetz-Anbringungsstation (4), die Station zum Auftragen der Klebesubstanz (5), die Beladestation (6), den Trockenofen (7) und die Entladestation (8) zu bewegen.

4. Anlage (1) gemäß Anspruch 2 oder 3, ferner umfassend eine Station zum Aufbringen eines Trennmittels (3), die konfiguriert ist, um ein Trennmittel (D) auf das starre Trägerelement (B) aufzutragen,
wobei die Station zum Aufbringen des Trennmittels (3) in Bezug auf eine Bewegungsrichtung des starren Trägerelements (B) in der Anlage stromaufwärts von der Verstärkungsnetz-Anbringungsstation (4) angeordnet ist.

5. Anlage (1) gemäß Anspruch 4, wobei das Trennmittel (D) Wachs oder ein Silikonmaterial ist.

6. Anlage (1) gemäß einem der vorhergehenden Ansprüche, ferner umfassend eine Reinigungsstation (9), die konfiguriert ist, um Fremdkörper von dem starren Trägerelement (B) zu entfernen,
wobei die Reinigungsstation (9) in Bezug auf eine Bewegungsrichtung des starren Trägerelements (B) in der Anlage stromaufwärts von der Verstärkungsnetz-Anbringungsstation (4) und der Station zum Aufbringen des Trennmittels (3), falls vorhanden, angeordnet ist.

7. Anlage (1) gemäß einem der vorhergehenden Ansprüche, wobei die Verstärkungsnetz-Anbringungsstation (4) mindestens zwei Verstärkungsnetz-Anbringungsmodule (41, 42) umfasst, die abwechselnd miteinander betätigt werden können, wobei jedes Verstärkungsnetz-Anbringungsmodul (41, 42) konfiguriert ist, um ein jeweiliges Netz (R) auf das starre Trägerelement (B) anzubringen.

8. Anlage (1) gemäß einem der vorhergehenden Ansprüche, wobei die Station zum Auftragen der Klebesubstanz (5) konfiguriert ist, um einen Polyurethankleber auf das Netz (R) aufzutragen, wenn eine Keramikplatte bearbeitet wird, oder ein Epoxidharz, wenn eine Steinplatte bearbeitet wird.

9. Anlage gemäß einem der vorhergehenden Ansprüche, ferner umfassend eine atmosphärische Vakuumstation, die zwischen der Beladestation und dem Trockenofen (7) angeordnet ist, wobei die atmosphärische Vakuumstation (1000) zwei Halbschalen (1301, 1302) umfasst, die geeignet sind, um miteinander in Kontakt zu kommen, um eine Gehäusekammer zu bilden, und eine Pumpe (1305), die geeignet ist, um den Druck im Inneren der Gehäusekammer auf einen Wert zwischen 2000 Pascal und 8000 Pascal zu reduzieren.

10. Verfahren (100) zum Bearbeiten einer Keramik- oder Steinplatte, umfassend die Schritte:
- Legen (102) eines Netzes (R) auf ein starres Trägerelement (B);
- Auftragen einer Klebesubstanz (103) auf das Netz, die geeignet ist, das Netz an einer ersten Fläche der Platte zu fixieren,
- Ablegen (104) der Platte auf das Netz, das mit Klebesubstanz beschichtet ist, das auf dem starren Trägerelement ausgebreitet ist,
- Trocknen (105) der Klebesubstanz, so dass das Netz an der Platte befestigt wird, und
- Entladen (106) der Platte mit dem Netz durch Heben der Platte mit dem Netz von dem starren Trägerelement.

11. Verfahren (100) gemäß Anspruch 10, wobei der Schritt des Entladens (106) der Platte (L) mit dem Netz (R) das Heben der Platte (L) von dem starren Trägerelement (B) vorsieht, ohne sie zu kippen.

12. Verfahren (100) gemäß Anspruch 10 oder 11, ferner umfassend den Schritt des Aufbringens (101) einer Schicht eines Trennmittels (D) auf das starre Trägerelement (B) vor dem Anbringen des Netzes (R) auf das starre Trägerelement (B).

13. Verfahren (100) gemäß einem der Ansprüche 10 bis 12, ferner umfassend den Schritt des Entfernens (107) von Bearbeitungsrückständen von dem starren Trägerelement (B) vor dem Anbringen (102) des Netzes (R) oder Aufbringen eines Trennmittels auf das starre Trägerelement (B).

14. Verfahren (100) gemäß einem der Ansprüche 10 bis 13, wobei der Schritt des Legens (102) des Netzes (R) auf das starre Trägerelement (B) die Auswahl eines auf das starre Trägerelement (B) aufzubringenden Netzes (R) zwischen mindestens zwei Netzen (R) vorsieht.

15. Verfahren (100) gemäß einem der Ansprüche 10 bis 14, ferner umfassend den Schritt des Bringens der Platte auf dem Trägerelement vor dem Trocknen des Klebers auf einen Druck zwischen 2000 Pascal und 8000 Pascal.

## Revendications

1. - Installation (1) pour le traitement de dalles en céramique ou en pierre, comprenant :
- un poste de chargement (6) pour charger une dalle (L) sur un élément de support rigide (B) ;
- un poste d'application de filet de renfort (4) pour poser un filet (R) ;
- un poste de dépôt (5) d'une substance adhésive (A), la substance adhésive (A) étant apte à fixer le filet (R) sur une première face (L2) de la dalle (L) ;
- un four de séchage (7) configuré pour recevoir la dalle (L) sur laquelle le filet (R) est appliqué sur la première face (L2) et pour sécher la substance adhésive (A), et
- un poste de déchargement (8) de la dalle (L) avec le filet collé (R), configuré pour lever la dalle (L) avec le filet (R) à partir de l'élément de support rigide (B),
**caractérisée par le fait que**
le poste d'application de filet de renfort (4) est configuré pour placer le filet (R) sur l'élément de support rigide (B) ;
le poste de dépôt (5) de la substance adhésive (A) est configurée pour déposer la substance adhésive (A) sur le filet (R) placé sur l'élément de support rigide (B), et
le poste de chargement (6) est configuré pour déposer la dalle (L) sur le filet (R) revêtu de la substance adhésive (A).

2. - Installation (1) selon la revendication 1, dans laquelle le poste de déchargement (8) est configuré pour lever la dalle (L) à partir de l'élément de support rigide (B) sans la retourner.

3. - Installation (1) selon la revendication 1 ou 2, comprenant en outre un groupe de mouvement (2) configuré pour déplacer l'élément de support rigide (B) à travers le poste d'application de filet de renfort (4), le poste de dépôt de la substance adhésive (5), le poste de chargement (6), le four de séchage (7) et le poste de déchargement (8), en séquence.

4. - Installation (1) selon la revendication 2 ou 3, comprenant en outre un poste d'application d'un agent de démoulage (3) configuré pour déposer un agent de démoulage (D) sur l'élément de support rigide (B),
le poste d'application de l'agent de démoulage (3) étant situé en amont du poste d'application de filet de renfort (4) par rapport à une direction de mouvement de l'élément de support rigide (B) dans l'installation.

5. - Installation (1) selon la revendication 4, dans laquelle l'agent de démoulage (D) est de la cire ou une matière en silicone.

6. - Installation (1) selon l'une quelconque des revendications précédentes, comprenant en outre un poste de nettoyage (9) configuré pour retirer des corps étrangers de l'élément de support rigide (B),
le poste de nettoyage (9) étant disposé en amont du poste d'application de filet de renfort (4) et, le cas échéant, du poste d'application de l'agent de démoulage (3), par rapport à une direction de mouvement de l'élément de support rigide (B) dans l'installation.

7. - Installation (1) selon l'une quelconque des revendications précédentes, dans laquelle le poste d'application de filet de renfort (4) comprend au moins deux modules d'application de filet de renfort (41, 42) qui peuvent être actionnés alternativement l'un avec l'autre, chaque module d'application de filet de renfort (41, 42) étant configuré pour déposer un filet (R) respectif sur l'élément de support rigide (B).

8. - Installation (1) selon l'une quelconque des revendications précédentes, dans laquelle le poste de dépôt de la substance adhésive (5) est configuré pour appliquer un adhésif polyuréthane sur le filet (R) en cas de traitement d'une dalle en céramique ou une résine époxy en cas de traitement d'une dalle en pierre.

9. - Installation selon l'une quelconque des revendications précédentes, comprenant en outre un poste de vide atmosphérique placé entre le poste de chargement et le four de séchage (7), le poste de vide atmosphérique (1000) comprenant deux demi-coques (1301, 1302) aptes à entrer en contact pour définir une chambre de réception, et une pompe (1305) apte à réduire la pression à l'intérieur de la chambre de réception jusqu'à une valeur comprise entre 2000 Pascals et 8000 Pascals.

10. - Procédé (100) de traitement d'une dalle en céramique ou en pierre, comprenant les étapes :
- poser (102) un filet (R) sur un élément de support rigide (B) ;
- déposer une substance adhésive (103) sur le filet pour fixer le filet sur une première face de la dalle,
- reposer (104) la dalle sur le filet, revêtu de la substance adhésive, tendu sur l'élément de support rigide,
- sécher (105) la substance adhésive de telle sorte que le filet est fixé à la dalle, et
- décharger (106) la dalle avec le filet par levage de la dalle avec le filet à partir de l'élément de support rigide.

11. - Procédé (100) selon la revendication 10, dans lequel l'étape de déchargement (106) de la dalle (L) avec le filet (R) prévoit de lever la dalle (L) à partir de l'élément de support rigide (B) sans la retourner.

12. - Procédé (100) selon la revendication 10 ou 11, comprenant en outre l'étape de dépôt (101) d'une couche d'agent de démoulage (D) sur l'élément de support rigide (B) avant de déposer le filet (R) sur l'élément de support rigide (B).

13. - Procédé (100) selon l'une quelconque des revendications 10 à 12, comprenant en outre l'étape de retrait (107) de résidus de traitement à partir de l'élément de support rigide (B) avant de déposer (102) le filet (R) ou un agent de démoulage sur l'élément de support rigide (B).

14. - Procédé (100) selon l'une quelconque des revendications 10 à 13, dans lequel l'étape de placement (102) du filet (R) sur l'élément de support rigide (B) prévoit de sélectionner un filet (R) à placer sur l'élément de support rigide (B) parmi au moins deux filets (R).

15. - Procédé (100) selon l'une quelconque des revendications 10 à 14, comprenant en outre l'étape consistant à amener la dalle sur l'élément de support à une pression comprise entre 2000 Pascals et 8000 Pascals avant de sécher l'adhésif.
